# DEMANDE DE BREVET EUROPEEN

(11) **EP 1 107 085 A1**
(43) Date de publication de la demande: **13.06.2001**
(21) Numéro de dépôt: 00490050.2
(22) Date de dépôt: 15.11.2000
(51) Int. Cl.: G05D 23/13

(54) **Dispositif de contrôle de l'écoulement d'un fluide logé dans un robinet thermostatique**

(30) Priorité: 03.12.1999 FR 9915247
(71) Demandeur: WATTS EUROTHERM S.A., 80390 Fressenneville (FR)
(72) Inventeur: Jelloul, Eddy, 80100 Abbeville (FR); Regnier, Frédéric, 80520 Yzengremer (FR); Bongrand, Laurent, 36400 Verneuil Sur Igneraie (FR)
(74) Mandataire: Ecrepont, Robert

(57) **Abrégé**

L'invention se rapporte à un dispositif de contrôle de l'écoulement d'un fluide logé dans un robinet thermostatique comprenant :
- logé dans le corps du robinet, un dispositif (5) de réglage de la température de sortie de l'eau comprenant un élément (3) thermo-sensible et un dispositif (11) de réglage du débit du robinet,
- un bouton (12) de manoeuvre du dispositif de réglage de la température et
- un organe (13) de manoeuvre du dispositif de réglage du débit.

Ce dispositif de contrôle est caractérisé en ce que :
- le dispositif (11) de réglage du débit est disposé en aval de la chambre de mélange et règle la section de passage de la conduite dite de sortie située en aval de la chambre de mélange et,
- les bouton et organe de manoeuvre se situent du même coté du corps du robinet logeant le dispositif de contrôle et cela à l'opposé de la conduite de sortie.

## Description

L'invention se rapporte à un dispositif de contrôle de l'écoulement d'un fluide logé dans un robinet thermostatique.

Notamment dans les cabines de douche, le robinet qui contrôle la circulation de l'eau chaude et de l'eau froide vers la pomme de douche ou le nez du robinet doit assurer non seulement la fonction marche arrêt mais également le mélange de l'eau chaude provenant d'une source d'eau chaude avec l'eau froide provenant d'une source d'eau froide pour obtenir une eau mélangée à la température souhaitée par l'utilisateur.

Il existe des systèmes de réglage exclusivement mécaniques qui consistent à régler les sections de passage d'eau chaude et d'eau froide.

Ces dispositifs ne peuvent corriger la température en sortie lorsqu'accidentellement le débit et/ou la température d'une des deux conduites eau chaude/eau froide est modifié.

On connaît donc d'autres dispositifs où le réglage du mélange eau chaude/eau froide se fait à l'aide d'un élément de commande sensible à la température plongé dans une chambre dite de mélange.

Cet élément de commande modifie automatiquement les sections de passage des arrivées d'eau chaude et d'eau froide dans la chambre de mélange et cela, par déplacement d'une pièce agissant comme un tiroir.

Des moyens permettent par l'intermédiaire d'un bouton de manoeuvre de fixer une consigne.

Ainsi, si la température de l'eau dans la chambre de mélange excède le seuil fixé par la consigne, l'élément sensible induit la fermeture de la section de passage de l'eau chaude de manière à éviter les brûlures.

Un tel dispositif contrôle donc le mélange de l'eau chaude et de l'eau froide par modification automatique de la section de passage de l'eau chaude et de l'eau froide vers la chambre de mélange située en aval.

Il faut cependant pouvoir stopper l'écoulement du robinet lorsque celui-ci n'est pas utilisé.

Il est donc habituel de loger dans le corps du robinet à la fois un dispositif de mélange sensible à la température et un dispositif de commande de l'ouverture et fermeture du robinet.

On connaît des dispositifs où le corps du robinet loge à l'une de ses extrémités un dispositif de réglage du débit et à son autre extrémité un dispositif de réglage automatique de la température, ces deux dispositifs étant reliés par une conduite de liaison.

Pour la manoeuvre et/ou le réglage, chacun des dispositifs présente un organe de manoeuvre situé pour l'un d'un côté du corps du robinet et pour l'autre de l'autre côté.

Cela nécessite de placer le corps parallèlement au mur d'où font saillie les conduites d'entrée de l'eau froide et de l'eau chaude.

Le dispositif de réglage du débit peut être positionné en aval ou en amont du dispositif du réglage de la température.

Lorsque les deux conduites sont regroupées, le dispositif de commande d'ouverture/fermeture est alors généralement disposé en amont du dispositif de contrôle du mélange de l'eau chaude et de l'eau froide, ceci de manière à isoler l'élément thermosensible lorsque le robinet n'est pas en fonctionnement.

Le dispositif de commande consiste, par exemple, en un jeu de plaquettes percées d'orifices qui, en position d'ouverture, positionne une plaquette par rapport à l'autre de sorte que les orifices d'une plaquette se trouvent en regard avec les orifices de l'autre plaquette.

En règle générale, le dispositif de commande du débit fonctionne en tout ou rien, c'est à dire qu'il ne dispose pas de position intermédiaire et le principe de ces robinets consiste à ouvrir ou fermer totalement les arrivées d'eau sans possibilité de régler le débit.

Dans certain cas, notamment pour les robinets équipant les éviers (EP-A-0.605.845 ou EP-A-0.342.709), il est prévu un réglage possible du débit mais cela nécessite de pouvoir modifier les sections de passage de l'eau chaude et de l'eau froide en synchronisme, ce qui oblige à des formes complexes d'orifices.

Il en est ainsi du dispositif décrit dans le document EP-1.022.634 où le jeu de disques est monté de telle sorte qu'il contrôle, d'une part, l'entrée de l'eau chaude et de l'eau froide et, d'autre part, la sortie d'eau mélangée.

Il est également connu un dispositif (EP-0.566.433) selon lequel l'élément thermo-sensible entraîne en rotation un des trois disques constituant en aval de la chambre de mélange un moyen de contrôle du débit.

Un tel montage n'est pas approprié car les contraintes mécaniques qui s'exercent sur l'élément thermo-sensible modifient alors la position du tiroir régulant la température.

Les contraintes sont très gênantes car l'amplitude de déplacement du tiroir est de l'ordre du millimètre et une légère modification perturbe donc le réglage de la température.

Un des résultats que l'invention vise à obtenir est un dispositif du type précité qui, notamment, remédie aux inconvénients précités.

L'invention a pour objet un dispositif de contrôle de l'écoulement d'un fluide d'un robinet comprenant :
- logé dans le corps du robinet :
   . d'une part, un dispositif de réglage de la température de sortie de l'eau comprenant un élément thermo-sensible qui, plongé dans une chambre dite de mélange, ajuste la température de l'eau mélangée par modification des sections de passage vers la chambre de mélange de l'eau chaude provenant d'une conduite d'arrivée d'eau chaude et l'eau froide provenant d'une conduite d'arrivée d'eau froide et,
   . d'autre part, un dispositif de réglage du débit du robinet,
- un bouton de manoeuvre du dispositif de réglage de la température et
- un organe de manoeuvre du dispositif de réglage du débit se situant du même coté du corps du robinet logeant le dispositif de contrôle et cela à l'opposé de la conduite de sortie,
ce dispositif étant caractérisé en ce que le moyen de transmission de la rotation de l'organe de manoeuvre est coaxial à l'élément thermosensible et ce moyen est une chemise guidée en rotation, logeant l'élément thermosensible, cette chemise étant, d'une part, par un premier moyen d'accouplement, liée en rotation avec l'organe de manoeuvre du dispositif de réglage du débit et, d'autre part, par un second moyen d'accouplement, liée en rotation avec le dispositif de réglage du débit.

L'invention sera bien comprise à l'aide de la description ci-après faite, à titre d'exemple non limitatif, en regard du dessin ci-annexé qui représente schématiquement :

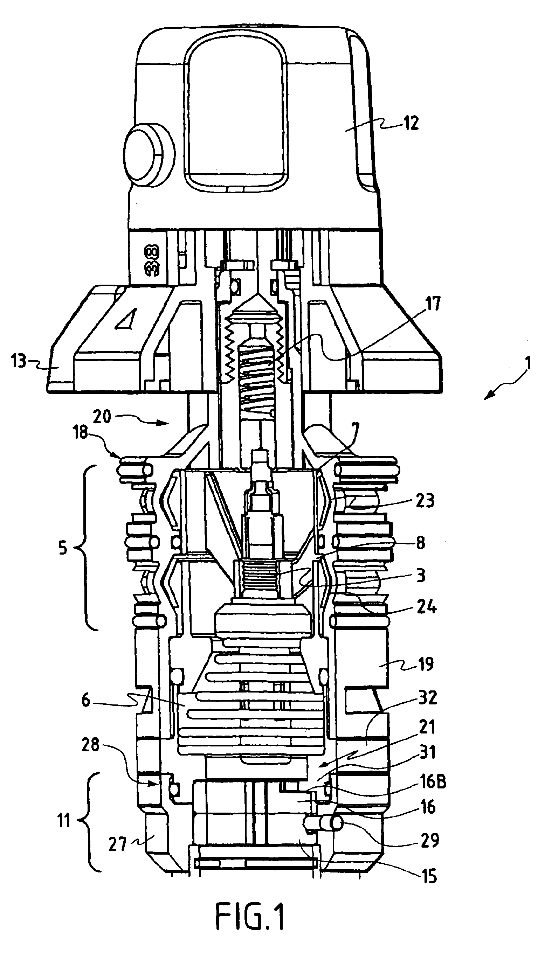

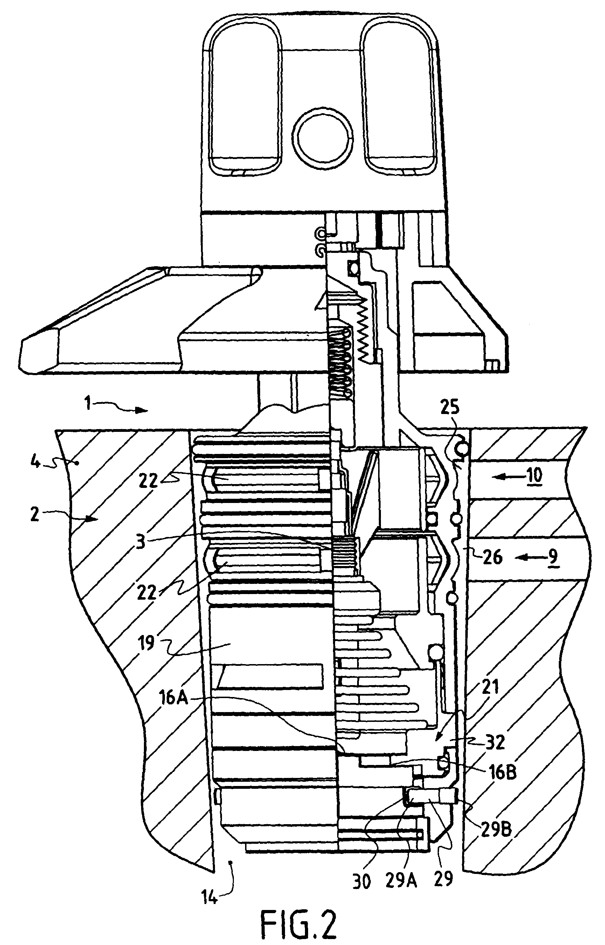

- figures 1 à 3 : trois coupes longitudinales partielles d'un dispositif de contrôle,
- figure 4 : une vue éclatée d'une partie du dispositif de contrôle.

En se reportant au dessin, on voit un dispositif 1 de contrôle de l'écoulement d'un fluide logé dans un robinet 2 thermostatique.

Ce dispositif permet, notamment, de prévenir les brûlures en cas de chute brutale de la pression d'eau froide et offre un confort d'utilisation lié au réglage automatique de la température de l'eau en sortie.

Classiquement, un tel robinet à élément 3 de régulation thermostatique comprend :
- logé dans le corps 4 du robinet:
   . d'une part, un dispositif 5 de réglage de la température de sortie de l'eau comprenant un élément 3 thermo-sensible qui, plongé dans une chambre 6 dite de mélange, ajuste la température de l'eau mélangée par modification des sections 7, 8 de passage vers la chambre 6 de mélange, de l'eau chaude provenant d'une conduite 9 d'arrivée d'eau chaude et de l'eau froide provenant d'une conduite 10 d'eau froide,
   . d'autre part, un dispositif 11 de réglage du débit du robinet,
- un bouton 12 de manoeuvre du dispositif de réglage de la température et
- un organe 13 de manoeuvre du dispositif de réglage du débit.

Le dispositif 11 de réglage du débit est disposé en aval de la chambre de mélange et règle la section de passage de la conduite 14 dite de sortie située en aval de la chambre de mélange.

Le réglage du débit est obtenu par deux plaquettes 15, 16, disposées l'une au dessus de l'autre, qui présentent chacune au moins un orifice.

L'une (15) des plaquettes 15, 16, dite plaquette fixe, est immobilisée en rotation tandis que l'autre plaquette (16), dite plaquette mobile, est guidée en rotation et entraînée en rotation au moins indirectement par l'organe 13 de manoeuvre du dispositif de réglage du débit.

Ces plaquettes 15, 16 sont de préférence en céramique

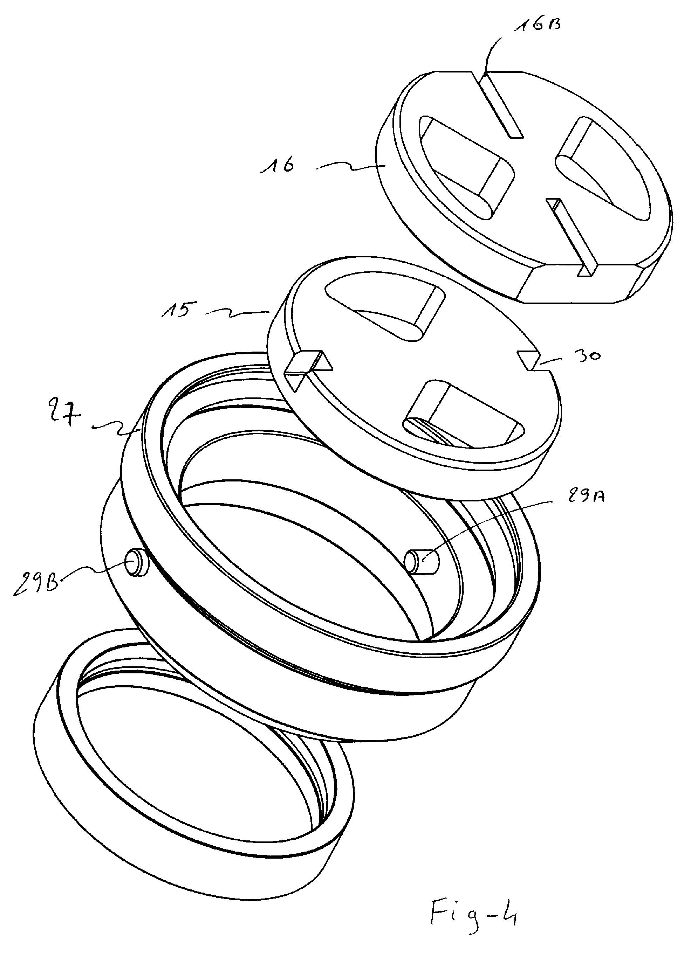

Comme on peut le voir en figure 4, chaque plaquette est percée de deux orifices qui assurent essentiellement l'écoulement en sortie.

Il n'est pas prévu d'orifice pour l'introduction de l'eau dans la chambre de mélange.

Avantageusement, les bouton et organe de manoeuvre se situent du même coté du corps du robinet logeant le dispositif de contrôle et cela à l'opposé de la conduite 14 de sortie de sorte que les moyens 17, 18 de transmission de la rotation des bouton et organe de manoeuvre sont coaxiaux.

Ils peuvent être également coaxiaux à l'élément 3 sensible.

Selon une caractéristique de l'invention, le dispositif de contrôle de la température est logé dans une chemise 19 guidée en rotation dans le corps du robinet et, cette chemise 19 qui est, d'une part, par un premier moyen 20 d'accouplement, liée en rotation avec l'organe de manoeuvre du dispositif de réglage du débit et, d'autre part, par un second moyen 21 d'accouplement, liée en rotation avec la plaquette 16 mobile, constitue au moins partiellement le moyen 17 de transmission de la rotation de la plaquette mobile.

Le dispositif de réglage du débit se trouve immédiatement en sortie du dispositif de réglage de la température sans conduite de liaison, ce qui favorise la réduction de l'encombrement.

Cette chemise 19 présente latéralement des lumières 22 permettant à l'eau provenant des conduites 9, 10 d'arrivée d'eau chaude et d'eau froide de pénétrer dans la chambre 6 de mélange via les passages d'eau froide et eau chaude dont la section dépend de l'élément thermo-sensible.

Les lumières s'étendent sur la quasi-totalité de la circonférence ?

Avantageusement, des clapets 23, 24 anti-retour en forme de bague et de section sensiblement en Vé empêchent le retour du fluide vers les conduites d'entrée d'eau froide et chaude.

Au regard de ces lumières, sont donc constituées des chambres 25, 26 annulaires délimitées par la face externe de la chemise, la face interne du logement du robinet recevant le dispositif de contrôle de l'écoulement et des joints 100, 101, 102.

Avantageusement, les plaquettes céramiques en forme de disque sont montées dans un manchon 27, lequel manchon présente au moins indirectement des moyens 28 d'association amovible avec la chemise 19 logeant le dispositif de contrôle de la température.

L'entraînement en rotation et/ou le blocage en rotation d'une pièce par rapport à une autre pièce se fait par exemple par coopération de forme.

Dans l'exemple représenté, un pion 29 traverse la paroi du manchon 27 logeant les disques 15, 16 céramiques et l'une (29A) des extrémités (29A, 29B) de ce pion pénètre dans une cavité 30 du disque céramique et l'autre (29B) dépasse extérieurement du manchon pour coopérer avec le corps du robinet, tel une entaille du corps, et ainsi verrouiller en rotation le disque fixe dans le corps de ce robinet.

Bien évidemment, le verrouillage en rotation du disque fixe avec le manchon et celui du manchon avec le corps du robinet peuvent être réalisés avec deux pions distincts mais la solution précédente est avantageuse.

Pour l'entraînement du disque 16 mobile qui se situe au plus près de la chambre 6 de mélange, celui ci présente, par exemple, dans sa face 16A tournée vers la chambre de mélange une empreinte 16B recevant un relief 31 présenté au moins indirectement par la chemise 19 qui l'entraîne en rotation.

Avantageusement, la liaison entre le disque mobile et la chemise est réalisée par une bague 32 intermédiaire qui s'accouple, d'une part, avec la chemise 19 et, d'autre part, avec le manchon 27.

Le dispositif de réglage de la température et les disques peuvent donc être remplacés sans nécessiter le remplacement de l'ensemble.

Par ailleurs, la présence de la chemise permet de réaliser des cartouches, c'est à dire une pièce déjà assemblée comprenant le dispositif de réglage de la température et le dispositif de réglage du débit disposés l'un derrière l'autre qu'il suffit de glisser dans le corps du robinet et qui est donc facilement échangeable.

Le diamètre de la bague intermédiaire et du manchon seront bien évidemment au plus égal au diamètre de la chemise.

Un autre avantage résulte d'une possible augmentation de la chambre de mélange permettant un bien meilleur mélange des eaux chaude et froide car elle évite la formation de veines chaude ou froide et donc un meilleur contrôle de la température.

Les conduites d'arrivée d'eau chaude et d'eau froide sont réalisées par des canaux traversant radialement l'enveloppe du robinet.

Beaucoup de fabricants de robinet ne réalisent en réalité que le corps du robinet à l'intérieur duquel ils placent des dispositifs de réglage de débit et/ou de température qu'ils acquièrent sur le marché.

Ils doivent alors tenir compte des spécificités techniques et dimensionnelles des appareils existants.

Ils disposeront ainsi d'une cartouche qui pourra éventuellement être équipée du réglage du débit.

Pour limiter les coûts de fabrication, il suffira de prévoir que le corps des robinets présente un alésage suffisamment long pour y loger les deux dispositifs même si un seul dispositif y est monté à l'intérieur.

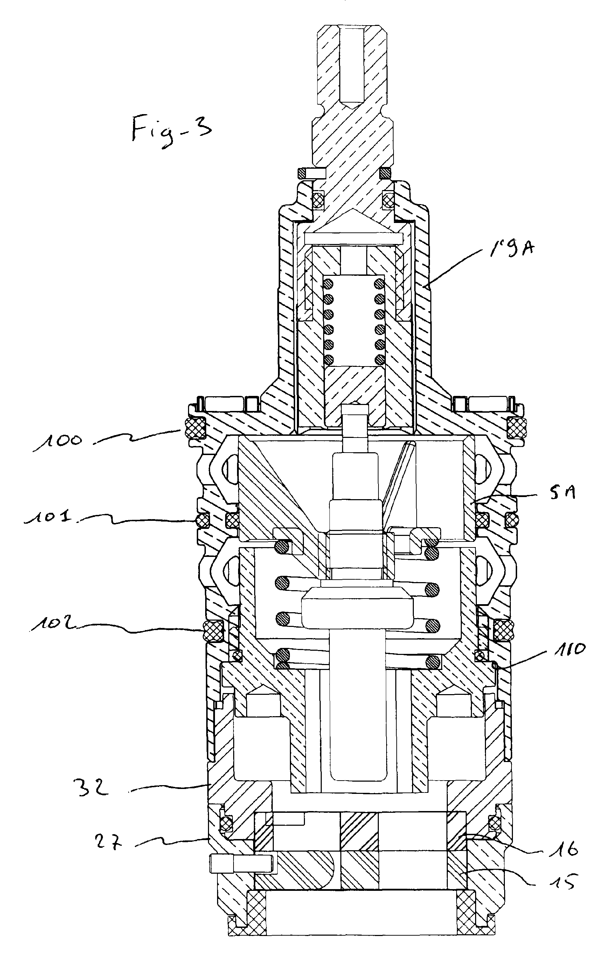

Sur la figure 3, on voit que le dispositif 5 de réglage de la température est placé dans le fond d'un alésage en appui sur une portée 110.

Le tiroir 5A règle l'arrivée de l'eau chaude et de l'eau froide.

Devant ce dispositif 5 de réglage de la température se positionne la bague 32 qui verrouille le dispositif de réglage de la température et sur lequel peut venir s'adapter le dispositif de réglage du débit.

La chemise 19 se prolonge de l'autre côté de la partie abritant la bague intermédiaire par un manchon 19A logeant la tige de manoeuvre pour le réglage de la température.

C'est sur ce manchon que l'on fixe l'organe de manoeuvre du débit.

Le système est facile à réaliser.

## Revendications

1. Dispositif de contrôle de l'écoulement d'un fluide logé dans un robinet thermostatique comprenant :
- logé dans le corps (4) du robinet:
. d'une part, un dispositif (5) de réglage de la température de sortie de l'eau comprenant un élément (3) thermo-sensible qui, plongé dans une chambre (6) dite de mélange, ajuste la température de l'eau mélangée par modification des sections (7, 8) de passage vers la chambre (6) de mélange, de l'eau chaude provenant d'une conduite (9) d'arrivée d'eau chaude et de l'eau froide provenant d'une conduite (10) d'eau froide,
. d'autre part, un dispositif (11) de réglage du débit du robinet, disposé en aval de la chambre de mélange pour régler la section de passage de la conduite (14) dite de sortie située en aval de la chambre de mélange,
- un bouton (12) de manoeuvre du dispositif de réglage de la température et un organe (13) de manoeuvre du dispositif de réglage du débit se situant du même coté du corps du robinet logeant le dispositif de contrôle et cela à l'opposé de la conduite (14) de sortie,
ce dispositif étant **CARACTERISE** en ce que le moyen (17) de transmission de la rotation de l'organe de manoeuvre est coaxial à l'élément thermosensible et ce moyen (17) est une chemise (19) guidée en rotation, logeant l'élément (3) thermosensible, cette chemise (19) étant, d'une part, par un premier moyen (20) d'accouplement, liée en rotation avec l'organe de manoeuvre du dispositif de réglage du débit et, d'autre part, par un second moyen (21) d'accouplement, liée en rotation avec le dispositif (11) de réglage du débit.

2. Dispositif de contrôle selon la revendication 1 **caractérisé** en ce que :
- le réglage du débit est obtenu par deux plaquettes (15, 16), disposées l'une au dessus de l'autre, qui présentent chacune au moins un orifice.et,
- l'une (15) des plaquettes (15, 16), dite plaquette fixe, est immobilisée en rotation tandis que l'autre plaquette (16), dite plaquette mobile, est guidée en rotation et entraînée en rotation au moins indirectement par l'organe (13) de manoeuvre du dispositif de réglage du débit.

3. Dispositif de contrôle selon la revendication 1 **caractérisé** en ce que la chemise (19) présente latéralement des lumières (22) permettant à l'eau provenant des conduites (9, 10) d'arrivée d'eau chaude et d'eau froide de pénétrer dans la chambre (6) de mélange via les passages d'eau froide et eau chaude dont la section dépend de l'élément thermosensible.

4. Dispositif de contrôle selon la revendication 1 **caractérisé** en ce que le dispositif de réglage du débit et le dispositif de réglage de la température forment une cartouche.

5. Dispositif de contrôle selon la revendication 2 **caractérisé** en ce que les plaquettes céramiques en forme de disque sont montées dans un manchon (27), lequel manchon présente au moins indirectement des moyens (28) d'association amovible avec la chemise (19) logeant le dispositif de contrôle de la température.

6. Dispositif de contrôle selon la revendication 5 **caractérisé** en ce qu'un pion (29) traverse la paroi du manchon (27) logeant les disques (15, 16) céramiques et l'une (29A) des extrémités (29A, 29B) de ce pion pénètre dans une cavité (30) du disque céramique et l'autre (29B) dépasse extérieurement du manchon pour coopérer avec le corps du robinet.

7. Dispositif de contrôle selon la revendication 2 **caractérisé** en ce que la liaison entre le disque mobile et la chemise est réalisée par une bague (32) intermédiaire qui s'accouple, d'une part, avec la chemise (19) et, d'autre part, avec un manchon (27).

8. Dispositif de contrôle selon la revendication 1 **caractérisé** en ce que, pour l'entraînement du disque (16) mobile qui se situe au plus près de la chambre (6) de mélange, celui ci présente dans sa face (16A) tournée vers la chambre de mélange une empreinte (16B) recevant un relief (31) présenté au moins indirectement par la chemise (19) qui l'entraîne en rotation.
